(19) Europäisches Patentamt
European Patent Office
Office européen des brevets

(11) Publication number: **0 001 587**
**B1**

(12) **EUROPEAN PATENT SPECIFICATION**

(45) Date of publication of patent specification: **25.11.81**

(51) Int. Cl.³: **C 07 C 161/00, A 01 N 41/12**

(21) Application number: **78101058.2**

(22) Date of filing: **03.10.78**

(54) **Pesticidally active bis-(O-imino-N-methyl-carbamic acid)-N,N'-disulfide derivatives, process for their production, compositions containing them and their use in pest control.**

(30) Priority: **12.10.77 CH 12456/77**
**13.04.78 CH 3961/78**

(43) Date of publication of application:
**02.05.79 Bulletin 79/9**

(45) Publication of the grant of the European patent:
**25.11.81 Bulletin 81/47**

(84) Designated Contracting States:
**BE CH DE FR GB NL**

(56) References cited:
**GB - A - 1 477 440**
**GB - A - 1 486 969**

(73) Proprietor: **CIBA-GEIGY AG**
**Patentabteilung Postfach**
**CH-4002 Basel (CH)**

(72) Inventor: **Drabek, Jozef, Dr.**
**Benkenstrasse 12**
**CH-4104 Oberwil (CH)**

**EP 0 001 587 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Pesticidally active bis-(O-imino-N-methyl-carbamic acid)-N,N'-disulfide derivatives, process for their production, compositions containing them and their use in pest control

The present invention relates to novel, pesticidally active bis - (O - imino - N - methyl - carbamic acid) - N,N' - disulfide derivatives, to a process for their production, to pesticidal compositions comprising these derivatives as active ingredient and to the use of said derivatives in controlling pests.

Bis-(O-imino-N-methyl-carbamic-acid)-N,N'-monosulfide derivatives having insecticidal activity are known — see for example, British Patent Specification No. 1,486,969. Similar types of compounds, i.e. substituted thiosulphenyl carbamoyl oximes, having insecticidal and miticidal properties are known from British Patent Specification No. 1,477,440. In accordance with the present invention there are provided novel disulfide derivatives of related type, which are especially suitable for the control of pests and more specially for control of pests in growing crops and other plant cultures.

The bis-(O-imino-N-methyl-carbamic acid)-N,N'-disulfide derivatives of the present invention are those of the formula I

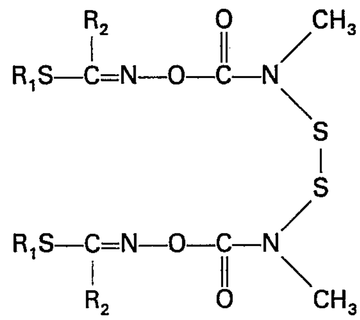

(I)

wherein $R_1$ is $C_1$—$C_3$-alkyl or allyl and

$R_2$ is methyl, aminocarbonyl, methylaminocarbonyl or dimethylaminocarbonyl.

In accordance with the present invention it has now been found that the compounds of the formula I possess excellent insecticidal properties. In particular they exhibit a high degree of insecticidal activity against a variety of insect pests, for example of the orders Lepidoptera and Colleoptera, causing damage to plants, especially cotton plants.

Thus all of the compounds of the formula I herein described have been found to be highly effective against pests of, for example, the species Spodoptera littoralis, Heliothis virescens, Dysdercus fasciatus, Leptinotarsa decemlineata and-or Anthonomus grandis. Moreover in the case of compounds of the formula I wherein:

$R_1$ is $C_1$—$C_3$-alkyl, preferably methyl or ethyl, and especially such compounds wherein additionally

$R_2$ is methyl or aminocarbonyl, this activity is characterised by being persistent over prolonged periods of time. For this reason such compounds are, in accordance with the present invention, preferred.

In addition to the foregoing it has surprisingly been found that the compounds of the formula I, unlike e.g. their known monosulfide analogues, also possess useful acaricidal properties and are for example effective against a variety of plant mites, e.g. of the Family Tetranychidae.

In accordance with the foregoing the present invention also provides a method of controlling insect and acarid pests at a locus, which method comprises applying to said locus a compound of the formula I as herein described. Preferably said locus is an agricultural or horticultural crop and most preferably a cotton crop.

In accordance with a further aspect the present invention also provides a process for the production of compounds of the formula I, which process comprises reacting a compound of the formula II

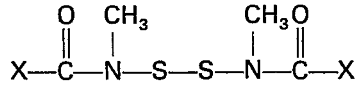

(II)

wherein X is halogen, with a compound of the formula III

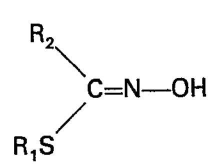

(III)

wherein $R_1$ and $R_2$ have the meanings given for formula I, said reaction being conducted in the presence of a base.

The above process is preferably conducted at a temperature of from −50°C to +100°C, most preferably −10° to +50°C, at normal pressure and in the presence of one or more solvents and/or diluents inert to the reactants.

Suitable bases for use in the process of the invention include tertiary amines such as trialkylamines, pyridine and dialkylanilines; the hydroxides, oxides, carbonates and bicarbonates of alkali- and earth-alkali- metals; as well as alkali-metal alcoholates such as potassium-t-butylate and sodium methylate.

Suitable solvents and diluents include ethers and ether-like compounds such as diethylether, diisopropylether, dioxan and tetrahydrofuran; aliphatic and aromatic hydrocarbons such as benzene, toluene and the xylenes; and ketones such as acetone, methylethylketone and cyclohexanone. The starting materials of the formulae II and III are known (see for example Belgian patent No. 717,705 and U.S. patent No. 3,987,096) or may be produced analogously to the known compounds.

In accordance with the present invention, the compounds of the formula I may be applied either alone or, as commonly practised in the art, in combination with suitable diluents and/or carriers as pesticidal compositions.

Suitable carriers and diluents are known in the art and may be solid or liquid. For practical purposes, and in particular when liquid diluents or carriers are used, such compositions will usually also include a surface active agent.

In accordance with practice usual in the art, such compositions may include further additives such as dispersing agents, wetting agents, thickeners, binders, fertilizers and/or additional active ingredients. The use of additional active ingredients, for example additional insecticides and acaricides, will be appropriate when it is desired either to broaden the activity spectrum of the composition or to adapt the composition to suit particular circumstances. Suitable additional active ingredients include the known pesticidally effective organo-phosphorus compounds, nitrophenols and nitrophenol derivatives, ureas, pyrethrinoid derivatives, carbamates and chlorinated hydrocarbons.

The compounds of the formula I may be put up in any of the composition forms commonly known in the art, for example as dusts, emulsions and emulsion concentrates, granulates, wettable powders, pastes, dispersions, sprays and solutions.

The pesticidal compositions in accordance with the invention may contain from 0.1 to 9.5% by weight, preferably from 0.5 to 80% by weight, of compound of the formula I.

The following examples illustrate the present invention.

## Example 1

Preparation of bis - (O - (1 - methylthio - ethylideneimino) - N - methylcarbamic acid) - N,N' - disulfide

8.1 g Bis - (N - methylcarbamoylfluoride) - disulfide together with 7.9 g 1-methylmercapto-acetaldoxime were dissolved with stirring at room temperature in 120 ml toluene. 7.6 g Triethylamine were added dropwise to the obtained solution and the reaction mixture stirred for 16 hours at room temperature and then for a further 2 hours at 45°C. After cooling the reaction mixture was filtered under suction and the toluene distilled off from the filtrate. After redistillation the desired bis - (O - (1 - methylthio - ethylideneimino) - N - methylcarbamic acid) - N,N' - disulfide of the formula

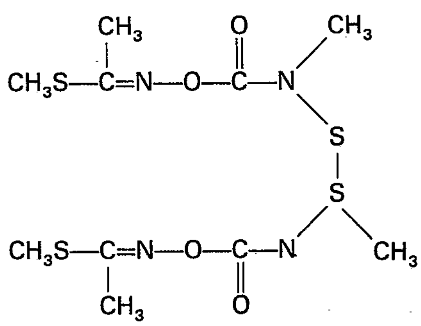

(compound no. 1)

was obtained as a viscous yellow fluid ($n_D^{40}$: 1,5789).

The following compounds of the formula I were obtained analogously:

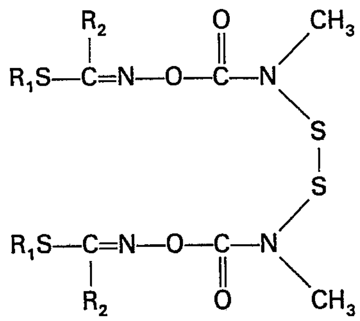

(I)

| Compound No | $R_1$ | $R_2$ | Physical Data |
|---|---|---|---|
| 2 | $C_2H_5$ | $CH_3$ | $n_D^{40}$: 1,5672 |
| 3 | n-$C_3H_7$ | $CH_3$ | $n_D^{40}$: 1,5590 |
| 4 | i-$C_3H_7$ | $CH_3$ | $n_D^{40}$: 1,5542 |
| 5 | $CH_2$=CH—$CH_2$— | $CH_3$ | $n_D^{20}$: 1,5858 |
| 6 | $CH_3$ | —$CONH_2$ | m.p. 152°C (Decomp.) |
| 7 | $CH_3$ | —$CONHCH_3$ | |
| 8 | $CH_3$ | —$CON(CH_3)_2$ | m.p.: 180—183°C |

Example 2

Insecticidal stomach-poison and contact activity

An aqueous solution containing 500 ppm of the compound to be tested was prepared from a 25% wettable powder. Cotton or potato plants were then sprayed with the test solution until dripping. After they had dried, the potato plants were infested with larvae of the species.

a) Leptinotarsa decemlineata (L3 instar), and the cottom plants with larvae of the species:
b) Heliothis virescens (L3/L4 instar)
c) Spodoptera littoralis (L3 instar) or
d) Dystercus fasciatus (L3 instar),

or with adult insects of the species:

e) Anthonomus grandis.

The plants were thereafter examined at intervals of 2, 4, 24 and 48 hours and the percentage of dead larvae insects estimated.

In the event that 100% mortality was achieved after 48 hours, the plants were re-infested with fresh larvae or insects and the percentage mortality again estimated at intervals of 2, 4, 24 and 48 hours after re-infestation.

If 100% mortality was again achieved, the plants were infested a third time, 8 days after the original commencement of the test and the percentage mortality again estimated at the same time intervals as previously.

For each test compound and each test species, two plants were used (potato or cotton) and during the course of the experiment the plants were kept in greenhouse compartments at a temperature of 24°C and at 60% relative humidity.

Compounds according to Example 1 exhibited a good activity in the above described test against one or more of the tested insect species.

As regards activity over prolonged periods (i.e. with infestation of the plant taking place 8 days after commencement of the test) compound 1 gave a particularly good performance in tests b and c; compound 2 in tests b, c and d; compound 4 in tests b and d; and compound 6 in tests a and e.

Example 3

Acaricidal (plant-miticidal)activity:

The primary leaves of bean (Phaseolus vulgaris) plants were infected with mites of the species Tetranychus urticae (OP-sens.) or Tetranychus cinnabarinus (OP-tolerant) by contacting them with infested leaf portions taken from a mass culture. (The tolerance of the species indicates their resistance

or sensitivity to Diazinon). 16 hours later, the infected plants were sprayed until dripping with an aqueous solution containing 400 or 200 ppm of the compound to be tested. The infected leaves were examined 24 hours and 7 days after spraying by means of a binocular microscope and the percentage of dead adults and larvae (all mobile stages) estimated.

One infected plant was employed for each species at each test concentration and the plants were kept during the course of the test in greenhouse compartments at a temperature of 25°C and at 60% relative humidity.

The compounds according to Example 1 exhibited a positive plant-miticidal activity in the above test.

Example 4

Preparation of pesticidal compositions

The following are illustrative of standard methods by which pesticidal compositions in accordance with the present invention may be prepared. All parts are by weight.

a) *Dust*

2 parts of a compound of the formula I are mixed and ground with
1 part highly dispersed silicic acid and
97 parts talcum.

b) *Emulsion concentrate I*

20 parts of a compound of the formula I in
70 parts xylene are combined with
10 parts of an emulsifying agent consisting of a mixture of an arylphenylpolyglycol ether and the calcium salt of dodecylbenzylsulphonic acid.

The obtained emulsion concentrate may subsequently be diluted with water to give a milky emulsion of the desired concentration.

c) *Emulsion concentrate II*

5 to 30 parts of a compound of the formula I are dissolved in a mixture comprising
30 parts dibutylphthalate,
10 parts "Solvent 200" (a low viscosity, highly aromatic petroleum distillate) and
15 to 35 parts "Dutrex 238 FC" (a viscous, highly aromatic petroleum distillate) by stirring at room temperature. The obtained solution is thereafter combined with
10 parts of an emulsifier comprising caster oil-polyglycol ether and the calcium salt of dodecylbenzylsulphonic acid.

The obtained concentrate may be diluted with water to give a milky emulsion of the desired concentration.

d) *Wettable powder*

5 to 30 parts of a compound of the formula I are intimately mixed in a mixing apparatus with
5 parts silicic acid (K320) and
55 to 80 parts kaolin (B 24) and a mixture of dispersing agents comprising
5 parts sodium-lauryl-sulphonate and
5 parts of an alkyl-aryl-polyglycolether.

The obtained mixture is thereafter milled and/or rolled to give an average particle size of 5—15 μm. The resultant powder may be suspended in water.

**Claims**

1. A compound of the formula I

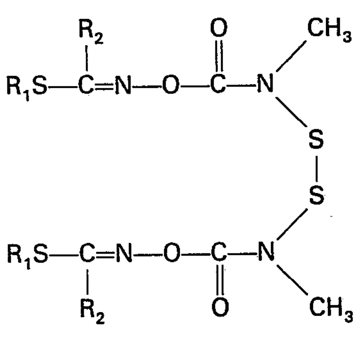

(I)

wherein $R_1$ is $C_1$—$C_3$-alkyl or allyl and
$R_2$ is methyl, aminocarbonyl, methylaminocarbonyl or dimethylaminocarbonyl.

2. A compound as claimed in claim 1, wherein $R_1$ is $C_1$—$C_3$-alkyl.

3. A compound as claimed in claim 2, wherein $R_1$ is methyl or ethyl.
4. A compound as claimed in claim 2 or claim 3, wherein $R_2$ is methyl or aminocarbonyl.
5. The compound as claimed in claim 4 of the formula

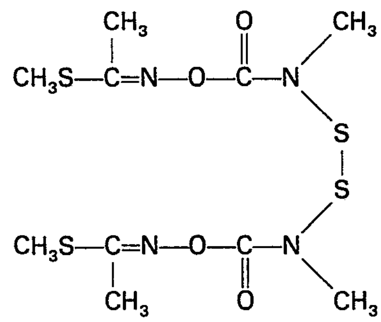

6. The compound as claimed in claim 4 of the formula

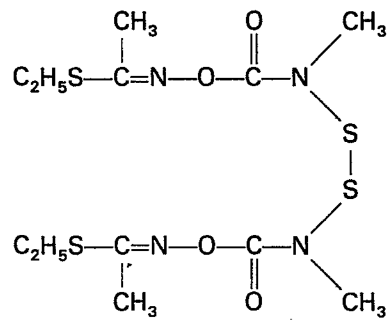

7. The compound as claimed in claim 4 of the formula

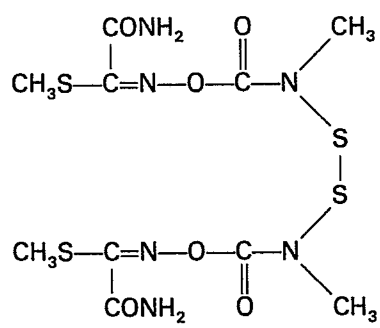

8. Process for the production of a compound as claimed in any one of claims 1 to 7, which process comprises reacting a compound of the formula II

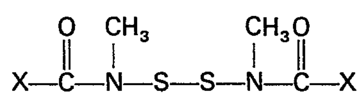 (II)

wherein X is halogen, with a compound of the formula III

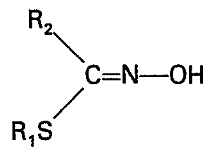 (III)

wherein $R_1$ and $R_2$ have the meanings given in any one of claims 1 to 7, said reaction being conducted in the presence of a base.

9. A pesticidal composition comprising a compound as claimed in any one of claims 1 to 7, together with either (i) a solid diluent or carrier therefor or (ii) a surface active agent and a liquid diluent or carrier therefor.

10. A method of controlling insect or acarid pests at a locus, which method comprises applying to said locus a compound as claimed in any one of claims 1 to 7.

11. A method as claimed in claim 10 wherein the locus comprises an agricultural or horticultural crop.

**Revendications**

1. Composé de la formule I

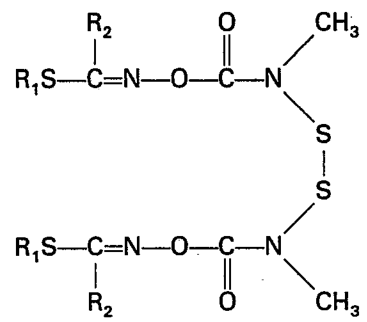

(I)

dans laquelle $R_1$ est un groupe alcoyle en $C_1$—$C_3$ ou allyle et $R_2$ est un groupe méthyle, aminocarbonyle, méthylaminocarbonyle ou diméthylaminocarbonyle.

2. Composé selon la revendication 1, caractérisé en ce que $R_1$ est un groupe alcoyle en $C_1$—$C_3$.

3. Composé selon la revendication 2, caractérisé en ce que $R_1$ est un groupe méthyle ou éthyle.

4. Composé selon l'une des revendications 2 et 3, caractérisé en ce que $R_2$ est un groupe méthyle ou aminocarbonyle.

5. Composé selon la revendication 4, caractérisé en ce qu'il est de la formule

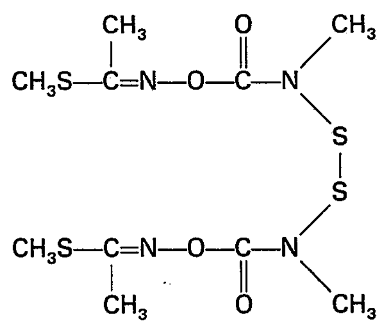

6. Composé selon la revendication 4, caractérisé en ce qu'il est de la formule

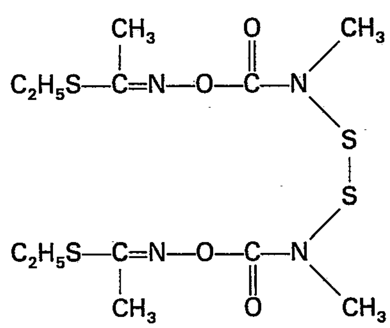

7. Composé selon la revendication 4, caractérisé en ce qu'il est de la formule

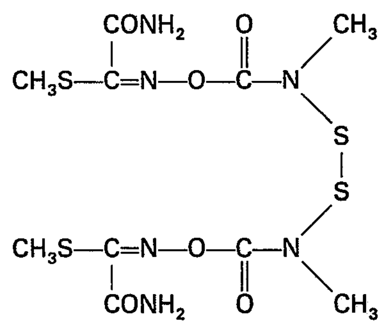

8. Procédé pour la préparation d'un composé tel que défini dans l'une quelconque des revendications 1 à 7, caractérisé en ce qu'on fait réagir un composé de la formule II

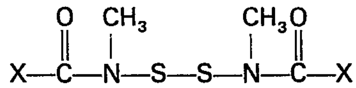 (II)

dans laquelle X est un halogène, avec un composé de la formule II

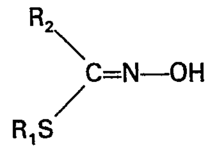 (III)

dans laquelle $R_1$ et $R_2$ ont les significations indiquées dans l'une quelconque des revendications 1 à 7, cette réaction étant conduite en présence d'une base.

9. Composition pesticide comprenant un composé tel que défini dans l'une quelconque des revendications 1 à 7, en même temps que soit (1) un diluant ou véhicule solide approprié, soit (2) un agent tensio-actif et un diluant ou véhicule liquide approprié.

10. Procédé pour combattre des insectes ou acariens nuisibles en un lieu, caractérisé en ce qu'on applique en ce lieu un composé tel que défini dans l'une qualconque des revendications 1 à 7.

11. Procédé selon la revendication 10, caractérisé en ce que le lieu comprend und plante agricole ou horticole.

**Patentansprüche**

1. Verbindung der Formel I

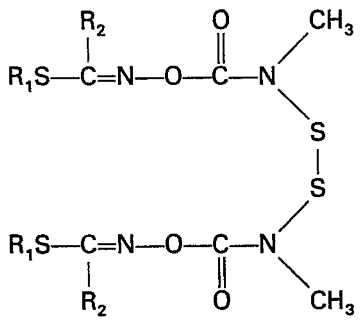 (I)

worin

$R_1$ eine $C_1$—$C_3$-Alkyl- oder Allylgruppe und

$R_2$ eine Methyl-, Aminocarbonyl-, Methylaminocarbonyl- oder Dimethylaminocarbonylgruppe bedeuten.

2. Verbindung nach Anspruch 1, worin $R_1$ $C_1$—$C_3$-Alkyl bedeutet.

3. Verbindung nach Anspruch 2, worin $R_1$ Methyl oder Aethyl bedeutet.

4. Verbidung nach Anspruch 2 oder 3, worin $R_2$ Methyl oder Aminocarbonyl bedeutet.

5. Verbindung nach Anspruch 4 der Formel

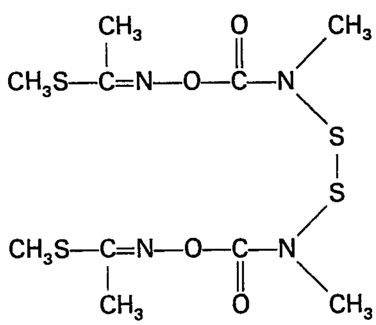

6. Verbindung nach Anspruch 4 der Formel

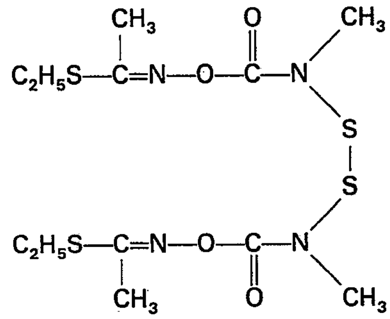

7. Verbindung nach Anspruch 4 der Formel

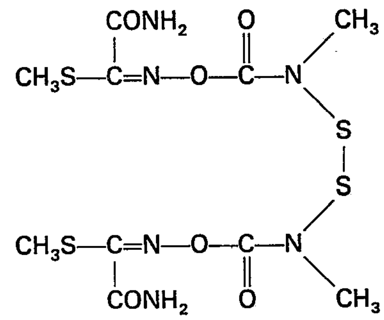

8. Verfahren zur Herstellung einer Verbindung gemäss einem der Ansprüche 1 bis 7, dadurch gekennzeichnet, dass man eine Verbindung der Formel II

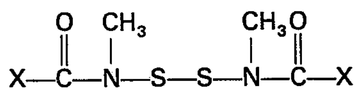

(II)

worin X Halogen bedeutet, mit einer Verbindung der Formel III

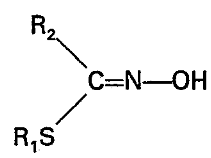

(III)

worin $R_1$ und $R_2$ die unter den Ansprüchen 1 bis 7 angegebenen Bedeutungen haben, in Gegenwart einer Base umsetzt.

9. Schädlingsbekämpfungsmittel enthaltend eine Verbindung gemäss den Ansprüche 1 bis 7 zusammen entweder mit
(i) einem festen Verdünnungsmittel oder Träger oder mit
(ii) einem oberflächenaktiven Mittel und einem flüssigen Verdünnungsmittel oder Träger.

10. Verfahren zur Bekämpfung von Insekten oder Akariden, dadurch gekennzeichnet, dass man die Insekten oder Akariden oder den Ort, wo sich diese Schädlinge aufhalten, mit einer Verbindung gemäss den Ansprüchen 1 bis 7 behandelt.

11. Verfahren nach Anspruch 10, dadurch gekennzeichnet, dass man landwirtschaftliche oder Garten-Kulturen behandelt.